# EUROPÄISCHE PATENTANMELDUNG

(11) **EP 1 413 957 A2**
(43) Veröffentlichungstag der Anmeldung: **28.04.2004**
(21) Anmeldenummer: 03022881.1
(22) Anmeldetag: 08.10.2003
(51) Int. Cl.: G06F 11/25

(54) **Verfahren und Vorrichtung zur rechnergestützten Analyse eines technischen Systems**

(30) Priorität: 23.10.2002 DE 10249513; 18.09.2003 DE 10343290
(71) Anmelder: SIEMENS AKTIENGESELLSCHAFT, 80333 München (DE)
(72) Erfinder: Gauckler, Wolfgang, 73230 Kirchheim/Teck (DE); Görl, Herbert, 35285 Gemünden (DE); Hoffmann, Werner, Dr., 91074 Herzogenaurach (DE); Kögel, Götz, 70191 Stuttgart (DE); Schischmanjan, Stepan, 70619 Stuttgart (DE)

(57) **Zusammenfassung**

Die Erfindung betrifft ein Verfahren und eine zur Ausführung des Verfahrens geeignete Vorrichtung zur Diagnose von technischen Einrichtungen und/oder Maschinen und/oder Anlagen, bei dem basierend auf einer Datenbasis (D) mit einer Anzahl von Diagnosen (1), denen jeweils zumindest ein Merkmal (M1 bis Mz) und dem Merkmal (M1 bis Mz) zumindest eine das technische System (2) repräsentierende Symptombeschreibung (S1 bis Sz) zugeordnet sind, eine Ausnahmesituation des Systems (2) iterativ anhand einer merkmals- und/oder symptombezogenen Analyse der betreffenden Diagnosen (1) derart diagnostiziert wird, dass anhand eines Merkmals (M1), für dessen Symptombeschreibung (S1) ein von einem erwarteten Ergebnis (Esoll) abweichender Wert (W1) vorliegt, diejenigen Diagnosen (1) identifiziert und ausgegeben werden, denen dieses Merkmal (M1) zugeordnet ist, wobei aus den identifizierten Diagnosen (1) anhand eines weiteren Merkmals (M2), für dessen Symptombeschreibung (S2) ein von einem erwarteten Ergebnis (Esoll) abweichender Wert (W2) vorliegt, diejenige Diagnose (1) aus den bereits ausgegebenen Diagnosen (1) identifiziert und ausgegeben wird, der dieses weitere Merkmal (M2) zugeordnet ist.

## Beschreibung

Die Erfindung betrifft ein Verfahren sowie eine Vorrichtung zur rechnergestützten Analyse eines technischen Systems, z. B. einer Werkzeugmaschine, z. B. einer CNC-Maschine, eines elektronischen Steuergeräts, insbesondere zur iterativen Einschränkung von möglichen Diagnosen einer Ausnahmesituation eines technischen Systems durch eine rechnergestützte Bewertung einzelner Symptome für die Ausnahmesituation.

Das der Erfindung zugrunde liegende Problem,besteht darin, Ursachen für Ausnahmesituationen, z. B. Fehler, Störungen oder dergleichen, von technischen Systemen, z. B. Werkzeugmaschinen, auf Basis von Diagnosewissen systemgestützt zu ermitteln. Dabei muss das Diagnosewissen zu einem technischen System, einer technischen Einrichtung, einer Maschine, Anlage oder dergleichen, im Folgenden zusammenfassend als technisches System bezeichnet, in dem Sinne leicht erweiterbar sein, dass zusätzliches Wissen ohne Rückwirkung auf das bereits vorhandene Wissen eingebracht werden kann.

Heutige Lösungen zur rechnerunterstützten Diagnose technischer Systeme beruhen im Wesentlichen auf folgende zwei Ansätze.

Beim ersten Ansatz handelt es sich um den so genannten Fehlerbaumansatz. Dabei wird ein Modell für Ausnahmesituationen eines Systems in Form von Fehlerbäumen beschrieben. Ein Fehlerbaum ist eine Repräsentation von Ursachen und/oder Symptomen von Ausnahmesituationen sowie untereinander bestehender Zusammenhänge in Form eines abstrakten Datentyps - dem Baum, auch Fehlerbaum genannt. Baumartige abstrakte Datentypen sind allgemein bekannt. Genau wie andere abstrakte Datentypen mit Baumstruktur umfasst auch ein Fehlerbaum eine Anzahl von Knoten und zwischen je zwei Knoten bestehende Verbindungen.

Ein einzelner Knoten ist jeweils entweder mit einer Folge von Anweisungen oder Arbeitsschritten sowie einer abschließenden Frage, also einer Untersuchung, oder mit einer Analyse oder Diagnose assoziiert. Verbindungen beschreiben die Übergänge zwischen einzelnen Knoten, also z. B. von einem aktuellen Knoten zu einem anderen Knoten (auch Folgeknoten genannt). Fehlerbäume können nun systematisch dadurch abgearbeitet oder traversiert werden, dass die Anweisungen oder Arbeitsschritte in einem Knoten und eine jeweils spezifische Untersuchung durchgeführt werden sowie eine abschließende Frage beantwortet wird. Aus der jeweiligen Antwort kann sich ein zutreffender Folgeknoten oder ein Ende ergeben. Ist die Antwort eine Diagnose, so ist die Ermittlung der Ursache der Ausnahmesituation, d. h. der Störungsursache, abgeschlossen. Ansonsten wird die Untersuchung gemäß dem Folgeknoten ausgeführt und wiederum eine abschließende Frage beantwortet usw. Bei einem endlichen Fehlerbaum muss jedes solches Traversieren des Fehlerbaums schließlich zu einem Knoten des Baums führen, der keine weiteren Verbindungen aufweist, ein so genanntes Blatt des Fehlerbaums. Ein solches Blatt ist mit einer Diagnose (= der Diagnose für die aktuelle Ausnahmesituation des Systems) verknüpft.

Der zweite Ansatz beruht auf dem Erfassen von Beziehungen zwischen Störungen und Störungsursachen (= Störungs-Ursachen-Beziehungen). Das verarbeitende System übernimmt automatisch oder durch Eingabe des Benutzers Meldungen des untersuchten Systems und sucht nach passenden Störungsursachen in Datenbanken. Diese können in Reparaturberichten oder Servicedokumenten enthalten sein, die dem Anwender elektronisch angezeigt werden.

Besonders in den Jahren 1980 bis 1990 wurden im Zusammenhang mit der oben genannten Problemstellung Konzepte und Systeme entwickelt, die auf einer Anwendung so genannter künstlicher Intelligenz beruhen; z. B. Hernandez, Daniel: Wissensbasierte Diagnose technischer Systeme, Mitteilungsblatt des Regionalen Rechenzentrums Erlangen, Nr. 44, Erlangen, Juni 1986 oder Pfeifer, Tilo; Richter, Michael M.: Diagnose von technischen Systemen, Deutscher Universitäts-Verlag, Wiesbaden, 1993.

Nachteilig bei diesen bekannten Ansätzen ist jedoch, dass bei komplexen technischen Systemen der oben genannten Art globales zusammenhängendes Diagnosewissen üblicherweise nicht zur Verfügung steht und, selbst wenn es zur Verfügung stünde, nicht verwertbar wäre, weil es aufgrund der Komplexität und Datenfülle nicht überschaubar ist.

Der Erfindung liegt daher die Aufgabe zugrunde, ein Verfahren sowie eine zur Ausführung des Verfahrens geeignete Vorrichtung anzugeben, mit dem die automatische rechnergestützte Analyse von technischen Systemen der oben genannten Art vereinfacht wird.

Die Aufgabe wird mittels eines Verfahrens mit den in Anspruch 1 angegebenen Merkmalen gelöst. Die Aufgabe wird ferner mittels einer zur Ausführung des Verfahrens vorgesehenen Vorrichtung mit den in Anspruch 10 angegebenen Merkmalen gelöst.

Die Erfindung geht dabei von der Erkenntnis aus, dass zu jedem System eine Vielzahl von Analysen in Art von Diagnosebeschreibungen durchgeführt oder einfach erstellt werden kann. Eine zur Anwendung im Zusammenhang mit der Erfindung geeignete Analyse eines technischen Systems umfasst zunächst eine Diagnose für eine Störungsursache und ein oder mehrere diese Diagnose repräsentierende Merkmale, d. h. eine Merkmalsmenge. Als Merkmale kommen sämtliche technische Daten des technischen Systems. Die Merkmale stellen dabei Kenngrößen, Betriebsgrößen, Eigenschaften, wie beispielsweise Druck, Durchfluss, Betriebszustand eines Motors dar. Die Merkmale werden dabei beispielsweise anhand von Ein- und/oder Ausgangswerten, internen Zuständen, Zwischenergebnissen, Merker- oder Registerinhalten und dergleichen und natürlich Fehler-, Warn- oder Alarmmeldungen oder Ähnliches analysiert.

Ein Merkmal ist dann ein Indiz für eine bestimmte Diagnose, wenn es bestimmten vorgegebenen Bedingungen entspricht. Das Merkmal wird dann als Symptom bezeichnet. Eine Bedingung kann z. B. das Verbleiben eines Messwertes in Form eines Eingangswertes innerhalb eines vorgegebenen (tolerierbaren) Intervalls sein. Eine andere Bedingung kann darin bestehen, dass ein anderer Messwert stets außerhalb eines vorgegebenen Intervalls oder unter- oder oberhalb eines Grenz- und/oder Schwellwertes verbleibt. Auch kann eine weitere Bedingung darin bestehen, dass eine bestimmte Warn-, Fehler- oder Alarmmeldung vorliegt oder nicht vorliegt. Ferner kann eine weitere Bedingung darin bestehen, dass für ein bestimmtes Merkmal eine vorgegebene Bedingung der oben skizzierten Art erfüllt ist oder nicht gleichzeitig für ein anderes Merkmal eine andere Bedingung erfüllt ist, usw. Bei den Bedingungen handelt es sich bevorzugt um Zugehörigkeitsfunktionen derart, dass der Wert eines Merkmals Element oder Nichtelement einer bestimmten Menge ist. Eine Zugehörigkeitsfunktion ist also eine Funktion, die als Ergebnis einen so genannten Wahrheitswert, z. B. "JA", "NEIN"; "TRUE", "FALSE", liefert, je nachdem ob die durch die Zugehörigkeitsfunktion definierte Bedingung erfüllt ist oder nicht. Solche Bedingungen mit grundsätzlich beliebiger Komplexität werden im Folgenden unter der Bezeichnung Symptombeschreibung zusammengefasst.

Jede Symptombeschreibung ist in der oben beschriebenen Art und Weise individuell formulierbar und damit geeignet, die jeweiligen Zusammenhänge innerhalb des technischen Systems sowie die Interaktion des technischen Systems mit der Umwelt, etwa einem gesteuerten und/oder überwachten technischen Prozess, zu berücksichtigen.

Damit ergibt sich eine Mehrzahl von Diagnosebeschreibungen, wobei die Mehrzahl zumindest eine Diagnosebeschreibung umfasst. Jede Diagnosebeschreibung umfasst eine Diagnose und eine Merkmalsmenge mit zumindest einem Merkmal. Jedem Merkmal wiederum ist zumindest eine Symptombeschreibung zugeordnet.

Basierend auf einer in dieser Art besonders einfach gebildeten Datenbasis wird nun eine iterative rechnergestützte Analyse oder Diagnose ausgeführt, wobei ein eine vorgegebene Diagnose oder vorgebbare Diagnose repräsentierendes Merkmal (auch Start-Merkmal genannt) und dessen Symptombeschreibungen anhand einer merkmalsbezogenen Analyse ermittelt und überprüft wird, wobei für das betreffende Start-Merkmal anhand dessen zugehörigen Wertes, z. B. eines Messwertes (= Istwert), bei einem von einem erwarteten Ergebnis, z. B. einem Referenzwert, abweichenden Wert das betreffende Start-Merkmal als Symptom in eine Merkmals- oder Symptomliste übernommen wird und diejenigen Diagnosen identifiziert werden, denen dieses Merkmal (= Start-Merkmal) zugeordnet ist.

Für die identifizierten Diagnosen werden weitere zugehörige Merkmale bestimmt und anhand mindestens eines dieser Merkmale eine weitere merkmalsbezogene Analyse durchgeführt. Das heißt, für das weitere Merkmal wird anhand dessen Symptombeschreibung überprüft, ob der das Merkmal repräsentierende Wert vom erwarteten Ergebnis abweicht. Ist dies der Fall, dann wird anhand des Merkmals aus den identifizierten Diagnosen die zu dem Merkmal zugehörige Diagnose identifiziert und ggf. in Abhängigkeit von der Größe des abweichenden Werts bewertet.

Zur Ermittlung der die Ausnahmesituation maßgeblich verursachenden Diagnose wird zweckmäßigerweise die merkmalsbezogene Analyse der identifizierten Diagnosen solange ausgeführt, bis anhand der Merkmalsliste der Ausnahmesituation diejenige Diagnose identifiziert wird, für die alle zu dieser Diagnose zugehörigen Merkmale als Symptom identifiziert werden. Vorteilhafterweise wird für das betreffende Merkmal bei einem vom erwarteten Ergebnis abweichenden Wert die zugehörige oder zugrunde liegende Diagnose einer Verdachtsdiagnosenliste zugeordnet. Mit anderen Worten: Es wird anhand von vom Normalzustand abweichenden Werten eines oder mehrerer Merkmale einer oder mehrerer Diagnosen eine Liste von Verdachtsdiagnosen erstellt.

Eine Verdachtsdiagnose ist eine Diagnose aus der oben genannten Anzahl von Diagnosebeschreibungen, bei der für mindestens ein Merkmal die Symptombeschreibung erfüllt ist. Gleichwertig ist in diesem Zusammenhang die komplementäre Situation, bei der für mindestens ein Merkmal die Symptombeschreibung nicht erfüllt ist. Ausschlaggebend ist in diesem Fall die Formulierung der Symptombeschreibung.

Als Ergebnis der merkmalsbezogenen Analyse ergibt sich vorzugsweise eine Anzahl von Verdachtsdiagnosen, wobei eine Verdachtsdiagnose ausreichend ist, um eine weitere iterative rechnergestützte Diagnose zu ermöglichen. Die Anzahl der Verdachtsdiagnosen wird als Verdachtsdiagnosenliste bezeichnet.

Sodann werden in einem nachfolgenden Verfahrensschritt anhand der Verdachtsdiagnosenliste sämtliche Merkmale, die Symptome der als Verdachtsdiagnosen ermittelten Diagnosen sind, bei denen also die Symptombeschreibung erfüllt ist, identifiziert und ggf. ausgegeben. Es ergibt sich dann eine Anzahl von Symptomen, wobei die Anzahl mindestens ein Symptom umfasst. Die Anzahl der Symptome wird als Merkmalsliste bezeichnet.

Die Merkmalsliste wird in einem weiteren Verfahrensschritt einem Benutzer zur Bewertung ausgegeben. Diese Anzeige und Bewertung geschieht in an sich bekannter Art und Weise mit üblichen Anzeige- und Eingabemitteln, also z. B. über eine Ausgabe auf einem Bildschirm und/oder möglicher Eingabe über eine Tastatur.

Zur Bewertung einzelner Symptome wird jeder Symptombeschreibung vorzugsweise ein Aktivierungsattribut zugeordnet. Das Aktivierungsattribut hat die Funktion, dass ein vorliegendes Symptom aktiviert oder deaktiviert wird. Je nach Art und Funktion des Aktivierungsattributs kann dieses automatisch aktiviert oder deaktiviert werden. Beispielsweise wird bei einem von einem vorgegebenen Ergebnis, z. B. einem Referenz- oder Grenzwert, abweichenden Ergebnis für einen Wert des Symptoms das Aktivierungsattribut aktiviert, z. B. gesetzt. Bei einem das vorgegebene Ergebnis gleichkommenden Wert wird hingegen das Aktivierungsattribut automatisch deaktiviert, z. B. rückgesetzt.

Alternativ oder zusätzlich kann das Aktivierungsattribut auch manuell aktiviert oder deaktiviert werden. Beispielsweise kann ein Bediener, der sich zu einem bestimmten Merkmal oder Symptom, z. B. einer von einem Absolutweggeber oder Inkrementalgeber erfassten Position, den aktuellen Istwert anzeigen lässt, aufgrund seiner Fachkompetenz entscheiden, dass trotz erfüllter Symptombeschreibung, also z. B. einer Position außerhalb eines tolerierbaren Bereichs, die Position nicht geeignet ist, den tatsächlich beobachteten Fehler hervorzurufen. Mit anderen Worten: Ein Nutzer oder Bediener entscheidet durch interaktive Eingabe, ob eine Symptombeschreibung für die aktuelle Diagnose wirksam oder nicht mehr wirksam sein soll. Dies kann durch Setzen bzw. Rücksetzen des Aktivierungsattributes der Symptombeschreibung geschehen. Eine Symptombeschreibung mit einer um ein Aktivierungsattribut erweiterten Funktion kann damit wie folgt zusammenfassend beschrieben werden: Ein Merkmal ist dann ein Symptom einer Diagnose, wenn zumindest die Symptombeschreibung erfüllt und ggf. zusätzlich das Aktivierungsattribut gesetzt ist. Jede Symptombeschreibung in ihrer erweiterten Funktion stellt beispielsweise ein UND-Gatter dar, dessen Ausgang nur dann aktivierbar ist, wenn das Aktivierungsattribut gesetzt ist.

Durch Bewertung der einzelnen Symptome der Merkmalsliste kann ein Benutzer nach und nach diejenigen Symptome ausschließen, die ihm aufgrund seines Fachwissens im Zusammenhang mit der tatsächlich vorliegenden Fehlersituation unbeachtlich zu sein scheinen. Mit anderen Worten: Wenn in einem technischen System eine erhebliche Fehlfunktion, z. B. ein Brand, ein Gasaustritt oder dergleichen, vorliegt, ist es für diese Fehlfunktion unerheblich, ob etwa im technischen System gleichzeitig ein Ausfall einer Instrumentenbeleuchtung oder Ähnliches vorliegt. Für beide Ausnahmesituationen können Verdachtsdiagnosen vorliegen, die zu einem Eintrag des zugehörigen Symptoms in die Merkmalsliste führen. Bei der Suche nach der Ursache für die erhebliche Fehlfunktion wird der Benutzer aber Symptome, die ersichtlich nicht mit der erheblichen Fehlfunktion in Zusammenhang stehen, Ausschließen und damit den Umfang der Merkmalsliste reduzieren.

Erfolgt das Ausschließen einzelner Symptome durch Rücksetzen des Aktivierungsattributes ist im Moment des Rücksetzens die ) Symptombeschreibung nicht mehr erfüllt, womit das Symptom aus der Merkmalsliste gelöscht wird. Auf diese Weise wird also die Anzahl der in der Merkmalsliste enthaltenen Symptome reduziert.

Der Vorteil der Erfindung besteht darin, dass das Diagnosewissen mit seiner großen Komplexität auf eine quasi eindimensionale Struktur, nämlich einzelne, grundsätzlich gleichgewichtige Diagnosen zurückgeführt ist, deren Merkmale iterativ hinsichtlich der Erfülltheit einer Symptombeschreibung rechnergestützt leicht überprüfbar sind. Die damit erhaltenen Ergebnisse sind einem Benutzer präsentierbar, der unter Anwendung seines Fachwissen anhand der merkmalsbezogenen Analyse einzelne Verdachtsdiagnosen ausschließen kann und somit die Menge der Verdachtsdiagnosen immer weiter reduziert, bis schließlich nur noch wenige, insbesondere nur noch eine Verdachtsdiagnose übrig bleibt, die damit als Diagnose der untersuchten Ausnahmesituation identifiziert sind bzw. ist.

Vorteilhaft können die Merkmale in der Merkmalsliste entsprechend vorgegebener oder vorgebbarer Prioritäten geordnet sein. Auf diese Weise werden zuerst solche Merkmale durch den Benutzer bewertet, die eine besonders hohe Relevanz aufweisen.

Weiter vorteilhaft können Abhängigkeiten zwischen Diagnosen einerseits und/oder Diagnosen und Symptomen andererseits ermittelt werden und für eine Zuweisung von Prioritäten für die einzelnen Symptome in der Merkmalsliste herangezogen werden.

Ebenfalls vorteilhaft können ermittelte oder festliegende Abhängigkeiten zwischen Diagnosen einerseits und/oder Diagnosen und Symptomen andererseits zur Gruppierung oder Kategorisierung von Symptomen in der Merkmalsliste und/oder Verdachtsdiagnosen in der Verdachtsdiagnosenliste herangezogen werden. Auf diese Weise ist beim Ausschließen eines bestimmten Merkmals aus der Merkmalsliste ein systematisches Ausschließen weiterer Merkmale aus der Merkmalsliste ermöglicht, welche mit dem ausgeschiedenen Symptom durch eine gleiche oder ausreichend ähnliche Gruppierung oder Kategorisierung verknüpft sind. Zur Darstellung solcher Abhängigkeiten eignet sich z. B. eine Matrix, wie sie als Gewichts- oder Distanzmatrix z. B. aus der Graphentheorie bekannt ist. Bei einer Anzahl von n-Symptomen in der Merkmalsliste ergäbe sich dann eine symmetrische (n×n)-Matrix, wobei der Wert an einer Position p, q (mit p = Zeilenindex, q = Spaltenindex) den Grad der Abhängigkeit zwischen dem Symptom p und dem Symptom q angibt. Eine geeignete numerische Skalierung der einzelnen Matrixpositionen ist derart möglich, dass ein Wert gleich oder nahe 1,0 eine erhebliche Abhängigkeit, also eine direkte Wechselwirkung und größere Werte hingegen eine zunehmend geringere Abhängigkeit codieren. Eine definitiv nicht bestehende Abhängigkeit wird mit einem ausreichend hohen Wert "unendlich" oder dem Wert 0,0 als Repräsentation des nicht darstellbaren Symbols codiert.

Der Vorteil der Erfindung und ihrer Weiterbildungen besteht insbesondere auch in der Erstellung des Diagnosewissens, also der dem erfindungsgemäßen Verfahren zugrunde liegenden Datenbasis. Dabei können einzelne Diagnosen besonders einfach zu der vorhandenen Datenbasis mit einer Vielzahl von Diagnosen hinzugefügt werden. Das geschieht rückwirkungsfrei zum bereits bestehenden Wissen, also zu bereits bestehenden Inhalten der Datenbasis. Umfasst eine kundenspezifische Maschine z. B. eine Option nicht, so kann das Diagnosewissen für diese Maschine aus dem Wissen der Maschine mit Option dadurch heraus gefiltert werden, dass alle Merkmale und Diagnosen ausgeschlossen oder gelöscht werden, die der Option zugeordnet sind.

Nachfolgend wird ein Ausführungsbeispiel der Erfindung anhand einer Zeichnung näher erläutert. Darin zeigen:
- FIG 1: ein beispielhaftes Schema für eine Diagnose mit Merkmalen und Symptomen einer Ausnahmesituation eines technischen Systems, und
- FIG 2: eine schematische Darstellung des iterativen Verfahrens zur Analyse des technischen Systems, insbesondere zur Einschränkung einer Vielzahl von mögliche Verdachtsdiagnosen auf eine einzige Verdachtsdiagnose.

Einander entsprechende Gegenstände oder Elemente sind in allen Figuren mit den gleichen Bezugszeichen versehen.

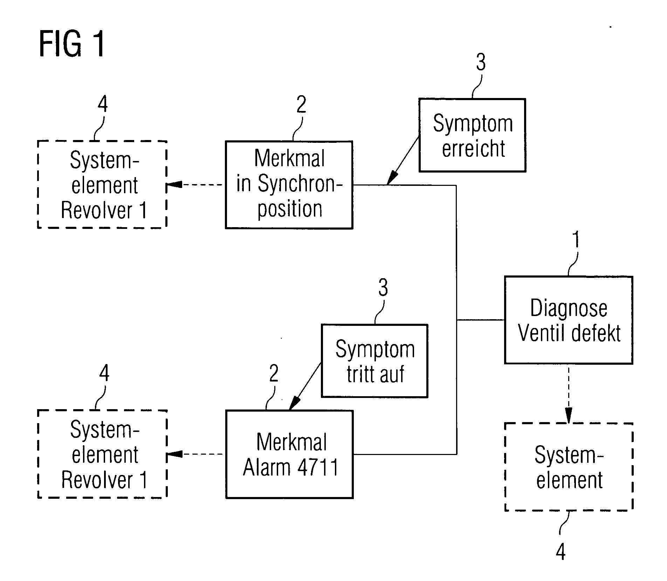

FIG 1 zeigt schematisch eine Darstellung einer Diagnose 1 für ein technisches System 2, z. B. für ein Ventil mit der Diagnose 1 "Ventil defekt". Unter technischem System 2 kann ein einfaches elektronisches Gerät, wie z. B. ein Steuergerät oder eine elektronische Werkzeugmaschine, oder eine komplexe technische Anlage, wie z. B. eine Druckermaschine, verstanden werden. Dabei ist dem technischen System 2 eine Anzahl von Diagnosen 1 als Analysen in Art von Beschreibungen zugeordnet.

Die oder jede Diagnose 1 ist ein Datensatz in einer Datenbasis D, auf die zur iterativen rechnergestützten Diagnose mittels nicht näher dargestellter Programmcodemitteln gemäß der Erfindung zugegriffen wird. Die Datenbasis D ist beispielsweise in Form einer Datenbank in einer Speichereinheit 3, z. B. auf einer Festplatte, einer RAM- oder ROM-Speicher oder einer CD-ROM, hinterlegt.

Jeder Datensatz in dieser Datenbasis D, also jede Diagnose 1, umfasst zum einen die Diagnose 1 selbst und zum anderen mindestens ein Merkmal M1, das die Diagnose 1 näher beschreibt. Bedingt durch die Komplexität technischer Systeme 2 umfasst die Diagnose 1 eine Vielzahl von Merkmalen M2 bis Mz. Die Merkmale M1 bis Mz stellen dabei Kenngrößen, Betriebsgrößen und/oder Eigenschaften des technischen Systems 2 dar. Dem oder jedem Merkmal M1 bis Mz einer Diagnose 1 ist zumindest eine Symptombeschreibung S1 bis Sz zugeordnet. Die Symptombeschreibung S1 bis Sz stellt eine Fehler- oder Situationsbeschreibung für das zugehörige Merkmal M1 bis Mz dar.

Des Weiteren ist jedem Merkmal M1 bis Mz sowie der Diagnose 1 eines jeden Datensatzes als ein erstes Programmcodemittel ein Systemelement 4 zur Selektion oder Markierung einzelner Merkmale M1 bis Mz oder kompletter Datensätze, also kompletter Diagnosen 1, zugeordnet. Das Systemelement 4 ist beispielsweise eine Komponente, wie beispielsweise ein Personalcomputer, ein Handprogrammiergerät, ein Bildschirm mit einer Tastatur oder eine andere Ein- und/oder Ausgabeeinheit, und/oder eine Funktion, wie eine Diagnosefunktion.

Eine Symptombeschreibung S1 bis Sz ist eine Zugehörigkeitsfunktion, der ein Wahrheitswert, z. B. ["JA"; "NEIN"], ["ERFÜLLT"; "NICHT ERFÜLLT"] oder ["TRUE"; "FALSE"], etc., zugeordnet wird, je nachdem, ob die Zugehörigkeitsfunktion erfüllt ist oder nicht. Bei einem der dargestellten Merkmale M1 bis Mz handelt es sich um ein Merkmal M1, das beispielsweise eine Betriebsposition eines als Ventil ausgebildeten technischen Systems 2 anhand eines Istwerts oder Werts W1, z. B. eines analogen oder digitalen Messwerts, näher beschreibt. Der aktuelle Wert W1 des Merkmals M1 lautet: "Merkmal in Synchronposition". Mit anderen Worten: Das Aggregat oder Ventil befindet sich in einer Synchronposition. Die zugehörige Symptombeschreibung S1 zielt darauf ab, zu prüfen, ob sich das Aggregat in Synchronposition befindet.

Anhand der zugrunde liegenden Zugehörigkeitsfunktion der Symptombeschreibung S1 wird also anhand eines ersten nicht näher dargestellten Programmcodemittel geprüft, ob der aktuelle Wert W1 des Merkmals M1 - der Positionswert - ein von einem erwarteten Ergebnis Esoll abweichenden Wert W1 aufweist. Beispielsweise wird geprüft, ob der aktuelle Wert W1 von der bei einer Synchronposition erwarteten Position oder einem erwarteten Positionsintervall abweicht. Entspricht also der gelieferte Positionswert dem bei Synchronposition erwarteten Positionswert oder befindet sich der Positionswert innerhalb eines erwarteten Positionsintervalls liefert die Zugehörigkeitsfunktion der Symptombeschreibung S1 einen positiven Wahrheitswert, also z. B. "JA", "ERFÜLLT", oder "TRUE", etc. Anderenfalls ergibt sich ein negativer Wahrheitswert, also z. B. "NEIN", "NICHT ERFÜLLT", oder "FALSE", etc. Für den Fall, dass der Symptombeschreibung S1 ein negativer Wahrheitswert zugeordnet wird, wird das zugehörige Merkmal M1 als Symptom S(M1) identifiziert. Mit anderen Worten: Diejenigen Merkmale M1 bis Mz, für dessen Symptombeschreibung S1 bis Sz ein von einem erwarteten Ergebnis Esoll abweichender Wert W1 bis Wz vorliegt, wird jeweils ein zugehöriges Symptom S(M1) bis S (Mz) zugeordnet.

Bei einem anderen der dargestellten Merkmale M1 bis Mz handelt es sich um ein Merkmal M2, das als Wert W2 ein Vorliegen einer Warn-, Fehler- oder Alarmmeldung umfasst. Der aktuelle Wert W2 des Merkmals M2 lautet: "Alarm 4711". Es liegt eine Alarmmeldung vor. Die zugehörige Symptombeschreibung S2 zielt darauf ab, zu bestimmen, ob eine Warn-, Fehler- oder Alarmmeldung vorliegt. Bei Vorliegen einer Alarmmeldung wird als Symptombeschreibung S2 die Meldung "Symptom: tritt auf" ausgegeben und das betreffende Merkmal M2 als Symptom S(M2) identifiziert.

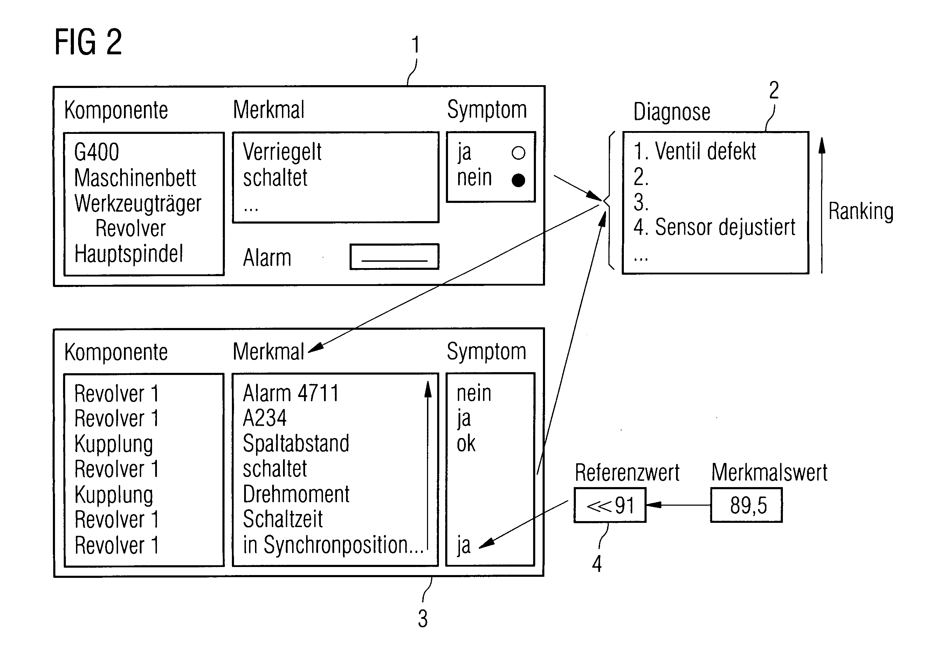

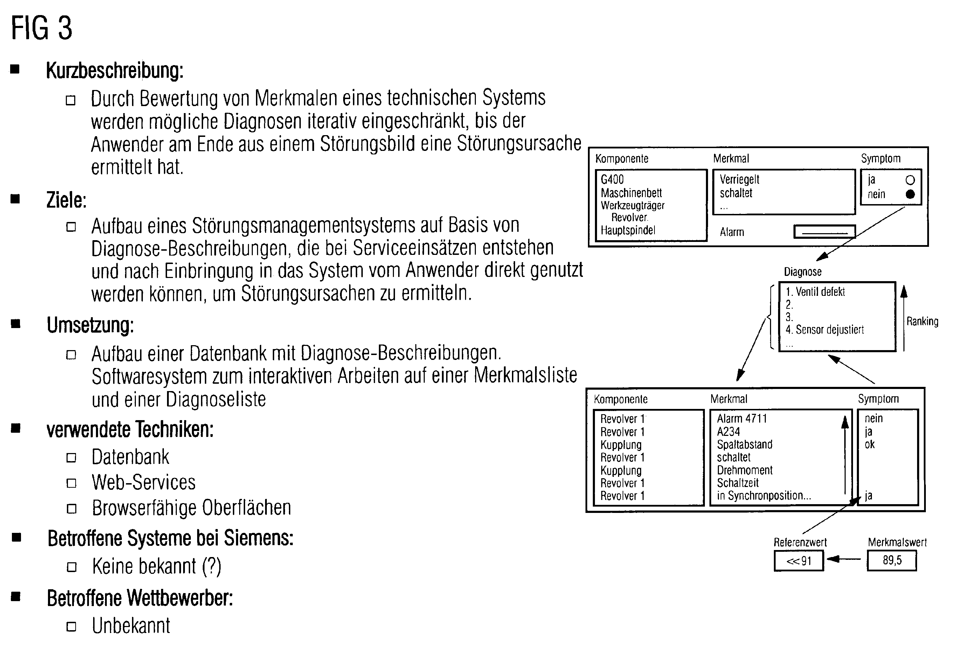

Die Auswertung der Diagnosen 1 der Datenbasis D ist in FIG 2 schematisch dargestellt. Die Darstellung in FIG 2 umfasst zunächst eine andere Darstellung einer Diagnose 1 in einer Form, wie sie z. B. einem Anwender des Verfahrens am Bildschirm eines Computer präsentiert werden kann. Durch Auswertung der einzelnen Diagnosen 1 für das technische System 2, d. h. durch Überprüfung der Symptombeschreibung S1 bis Sz jedes Merkmals M1 bis Mz einer Diagnose 1, ergibt sich eine Vielzahl von Diagnosen 1. Jedes Merkmal M1 bis Mz stellt eine Betriebsgröße, Kenngröße oder Eigenschaft einer zugehörigen Komponente K des technischen Systems 2 dar. Dabei wird anhand der Symptombeschreibung S1 bis Sz für mindestens ein Merkmal M1 bis Mz bei einem von einem erwarteten Ergebnis Esoll, z. B. einem Referenzwert, abweichenden Wert W1, z. B. einem Merkmalswert oder Istwert, das betreffende Merkmal M1 als Symptom S(M1) aktiviert und in eine Merkmalsliste 5 ausgegeben. Jede derartige Diagnose 1, d. h. diejenige Diagnose 1, die ein Merkmal M1 bis Mz mit einem von einem erwarteten Ergebnis Esoll abweichenden Wert W1 bis Wz oder aufweist, wird als Verdachtsdiagnose V markiert, ggf. aktiviert, bewertet und ausgegeben.

Die identifizierten Verdachtsdiagnosen V werden bevorzugt in Form einer Verdachtsdiagnosenliste 6 generiert und ausgegeben. Die Verdachtsdiagnosenliste 6 wird aus den die Datenbasis D bildenden einzelnen Diagnosen 1 abgeleitet (angedeutet durch den Pfeil P1 von der Diagnose 1 zur Verdachtsdiagnosenliste 6). Zur Verdachtsdiagnosenliste 6 gehört auch die in FIG 1 exemplarisch dargestellte Diagnose 1 "Ventil defekt", wenn eines der diese Diagnose 1 betreffenden Merkmal M1 bis Mz als Symptom S(M1) bis S(Mz) identifiziert ist.

Für die der Verdachtsdiagnosenliste 6 zugeordneten Diagnosen 1 und den der Merkmalsliste 5 zugeordneten Merkmalen M1 bis Mz wird anhand einer weiteren merkmalsbezogenen Analyse mindestens für ein weiteres Merkmal M1 bis Mz ein Symptomverdacht bestimmt, d. h., bei Vorliegen einer Abweichung wird das weitere Merkmal M1 bis Mz als Symptom S(M1) bis S(Mz) identifiziert. Anschließend werden die alle dieses Merkmal M1 bis Mz aufweisenden Diagnosen 1 in der Verdachtsdiagnosenliste 6 ausgegeben. In Abhängigkeit vom betreffenden Merkmal M1 bis Mz kann die Anzahl der Diagnosen 1 in der Verdachtsdiagnosenliste 6 variieren. Mit anderen Worten: Anhand einer weiteren merkmalsbezogenen Analyse der betreffenden Diagnosen 1 der Verdachtsdiagnosenliste 6 für weitere Merkmale M1 bis Mz dieser Diagnosen 1 wird bestimmt, ob deren zugehörige Symptombeschreibung S1 bis Sz einen von einem erwarteten Ergebnis Esoll abweichenden (Wahrheits-)Wert W1 bis Wz liefert. Diese betreffenden Merkmale M1 bis Mz werden zur Unterscheidung von anderen Merkmalen M1 bis Mz als Symptome S(M1) bis S(Mz) und entsprechend die Anzahl der Symptome S(M1) bis S(Mz), also die weitere Liste, als Merkmalsliste 5 bezeichnet. Die Ableitung der Merkmalsliste 5 aus der Verdachtsdiagnosenliste 6 ist durch den Pfeil P2 zwischen Verdachtsdiagnosenliste 6 und Merkmalsliste 5 angedeutet. Dieser Vorgang - merkmalsbezogene Analyse der Diagnosen 1 der Verdachtsdiagnosenliste 6 - wird solange ausgeführt, bis die Merkmalsliste 5 bis auf ein einziges Merkmal M1 bis Mz als Symptom S(M1) bis S(Mz) reduziert ist oder alternativ bis in der Verdachtsdiagnosenliste 6 diejenige Diagnose 1 identifiziert ist, für die deren zugehörigen Merkmale M1 bis Mz alle als Symptom S(M1) bis S(Mz) identifiziert sind.

Durch einen vertikal aufrechten Pfeil P3 ist in Bezug auf die Verdachtsdiagnosenliste 6 sowie in Bezug auf die Merkmalsliste 5 jeweils angedeutet, dass beide Listen 5, 6 entsprechend einer Priorität oder einer Wertigkeit der einzelnen Listenelemente, also der Verdachtsdiagnosen V bzw. der als Symptome S(M1) bis S(Mz) identifizierten Merkmale M1 bis Mz, geordnet sind. Beispielsweise ist in der Verdachtsdiagnosenliste 6 derjenigen Diagnose 1 die höchste Priorität zugeordnet, die die größte Anzahl von als Symptom S(M1) bis S(Mz) identifizierten Merkmalen M1 bis Mz aufweist.

Entsprechend der damit festgelegten Reihenfolge der Diagnosen 1 in der Verdachtsdiagnosenliste 5 und ggf. der Symptome S(M1) bis S(Mz) in der Merkmalsliste 5 erfolgt durch einen Anwender des Verfahrens ein Ausschließen einzelner Diagnosen 1 bzw. Symptome S(M1) bis S(Mz) mittels des Systemelements 4. Dies geschieht vorteilhaft interaktiv unter Ausnutzung an sich bekannter Darstellungen und Verfahren, also z. B. Aufruf eines Kontextmenüs oder "Anklicken" am Bildschirm, wobei FIG 2 ein Beispiel für eine Darstellungsmöglichkeit am Bildschirm angibt.

Das Ausschließen einzelner Diagnosen 1 aus der Verdachtsdiagnosenliste 6 und/oder Symptome S(M1) bis S(Mz) aus der Merkmalsliste 5 erfolgt für den Anwender transparent. Das heißt, beim Ausschließen eines Symptoms S(M1) bis S(Mz) durch den Anwender wird automatisch ein Aktivierungsattribut (nicht dargestellt), das vorzugsweise der Symptombeschreibung S1 bis Sz des jeweiligen Symptoms S(M1) bis S(Mz) zugeordnet ist, zurückgesetzt. Bei einem zurückgesetzten Aktivierungsattribut wird die für die Symptombeschreibung S1 bis Sz erforderliche Überwachung auf den vom erwarteten Ergebnis Esoll abweichenden Wert W1 bis Wz deaktiviert. Darüber hinaus wird das zugehörige Merkmal M1 bis Mz oder die zugehörige Diagnose 1 nicht in die Merkmalsliste 5 bzw. die Verdachtsdiagnosenliste 6 übertragen. Beim Zurücksetzen des Aktivierungsattribut wird also das jeweilige Symptom S(M1) bis S(Mz) automatisch aus der Merkmalsliste 5 gelöscht, die Diagnose 1 wird entsprechend in der Verdachtsdiagnosenliste 6 neu bewertet und priorisiert.

Zum Ausschließen einzelner Diagnosen 1 aus der Verdachtsdiagnosenliste 6 und/oder einzelner Symptome S(M1) bis S(Mz) aus der Merkmalsliste 5 kann sich der Anwender zu jedem Merkmal M1 bis Mz (Symptom) den aktuellen Wert W1 bis Wz des jeweiligen Merkmals M1 bis Mz anzeigen lassen. Vorliegend ist exemplarisch für das bereits in FIG 1 vorkommende Merkmal M1 der zugehörige Wert W1 "89,5" dargestellt. Des Weiteren ist zu diesem Merkmal M1 die Symptombeschreibung S1 angegeben, wobei die zugrunde liegende Zugehörigkeitsfunktion als Überprüfung im Hinblick auf ein erwartetes Ergebnis Esoll, z. B. einen Referenzwert, hier "91" dargestellt ist. Anhand des ermittelten Wertes W1 sowie anhand der Symptombeschreibung S1 kann ein sachkundiger Anwender besonders qualifiziert entscheiden, ob der Wert W1 die Bedingungen für das Merkmal M1 erfüllt, um als Symptom S(M1) identifiziert zu werden. Ist dies der Fall wird die Diagnose 1 in die Verdachtsdiagnosenliste 6 und das Symptom S(M1) wird in die Merkmalsliste 5 übertragen und dort ausgegeben. Anderenfalls werden die Diagnose 1 und das Symptom S(M1) gelöscht.

Ein Ausschließen einzelner Diagnosen 1 aus der Verdachtsdiagnosenliste 6 und/oder einzelner Symptome S(M1) bis S(Mz) oder einer Gruppe von Symptomen S(M1) bis S(Mz) aus der Merkmalsliste 5 kann auch anhand der Systemelemente 4, denen die einzelnen Merkmale M1 bis Mz und/oder Symptome S(M1) bis S(Mz) zugeordnet sind, erfolgen. Dies ist z. B. dann der Fall, wenn der Anwender aufgrund seiner Sachkunde entscheiden kann, dass ein Systemelement 4 keinen Einfluss auf die beobachtete Ausnahmesituation, z. B. Störung des technischen Systems 2, hat. Dann kann die komplette Anzahl der Symptome S(M1) bis S(Mz), die mit dem jeweiligen Systemelement 4 assoziiert ist, aus der Merkmalsliste 5 bzw. die zugrunde liegende Diagnose 1 aus der Verdachtsdiagnosenliste 6 gelöscht werden, so dass das betreffende Systemelement 4 deaktiviert wird.

Des Weiteren kann mittels der Systemelemente 4 eine der Generierung der Verdachtsdiagnosenliste 6 vorangehende Verarbeitung der Diagnosen 1 der Datenbasis D erfolgen. Für Systemelemente 4, die zwar in der Datenbasis D nicht aber beim untersuchten technischen System 2 vorhanden sind, etwa weil dem System 2 bestimmte optionale Funktionalitäten fehlen, ist keine Überprüfung der Symptombeschreibung S1 bis Sz erforderlich, weil die zugehörige Diagnose 1 niemals als Verdachtsdiagnose V in Frage kommt.

Die praktische Umsetzung des Verfahrens erfolgt in Form von Software, wobei unterschiedliche Ausprägungen von Software, also z. B. auch so genannte Firmware oder die Realisierung der Funktionalität der Software in Form von ASIC's und dergleichen, in Betracht kommt. Die umfangreiche Software lässt sich in einzelne, funktional zusammengehörige Abschnitte untergliedern. Solche Abschnitte werden z. B. als Module, Funktionen, Prozeduren, Routinen oder ähnlich bezeichnet. Zusammenfassend wird für solche Abschnitte die Bezeichnung Programmcodemittel verwendet.

Eine nicht dargestellte Vorrichtung zur Durchführung des Verfahrens gemäß der Erfindung umfasst also Mittel zum Speichern einer Mehrzahl von Diagnosen 1, denen jeweils zumindest ein Merkmal M1 bis Mz zugeordnet ist und bei denen dem oder jedem Merkmal M1 bis Mz zumindest eine Symptombeschreibung S1 bis Sz zugeordnet ist. Des Weiteren umfasst die Vorrichtung einen Speicher in Form eines Halbleiterspeichers (Hauptspeicher, RAM) oder in Form externer Speicher (Festplatte oder dergleichen), erste Programmcodemittel, also ein entsprechendes Softwaremodul, ein Unterprogramm oder dergleichen, zur Auswertung sämtlicher oder ausgewählter Symptombeschreibungen S1 bis Sz der gespeicherten Diagnosen 1, zweite Programmcodemittel, ein entsprechendes weiteres Softwaremodul, Unterprogramm oder dergleichen, zum Anlegen einer Merkmalsliste 5 bei der Auswertung der Symptombeschreibungen S1 bis Sz und dritte Programmcodemittel, also ein entsprechendes nochmals weiteres Softwaremodul, Unterprogramm oder dergleichen, zur Ausgabe des Inhalts der Merkmalsliste 5 für einen Anwender der Vorrichtung.

Für eine zur Ausführung sämtlicher Ausgestaltungen des Verfahrens geeignete und in ihrer Funktionalität um weitere Programmcodemittel erweiterte Vorrichtung gilt die vorstehende Beschreibung entsprechend.

Zusammenfassend lässt sich die Erfindung damit wie folgt beschreiben:

Es wird ein Verfahren und eine zur Ausführung des Verfahrens geeignete Vorrichtung zur Analyse von technischen Einrichtungen und/oder Maschinen und/oder Anlagen angegeben, bei dem eine Datenbasis D mit Datensätzen in Form von Diagnosen 1, denen zumindest ein Merkmal M1 bis Mz und dessen zugehörige Betriebskenngröße, ein Wert W1 bis Wz, zugeordnet ist. Jedem Merkmal M1 bis Mz wiederum ist zumindest eine Symptombeschreibung S1 bis Sz zugeordnet ist. Durch Auswertung aller oder ausgewählter Symptombeschreibungen S1 bis Sz werden entsprechend dem Ergebnis der Auswertung diejenigen Merkmale M1 bis Mz in eine Merkmalsliste 5 übernommen, deren Wert W1 bis Wz als Symptom S(M1) bis S(Mz) identifiziert werden. Die Merkmalsliste 5 wird zur weiteren Bearbeitung durch einen Anwender z. B. auf einen Bildschirm ausgegeben.

## Patentansprüche

1. Verfahren zur rechnergestützten Analyse eines technischen Systems (2), basierend auf einer Datenbasis (D) mit einer Anzahl von Diagnosen (1), denen jeweils zumindest ein Merkmal (M1 bis Mz) und dem Merkmal (M1 bis Mz) zumindest eine das technische System (2) repräsentierende Symptombeschreibung (S1 bis Sz) zugeordnet sind, wobei eine Ausnahmesituation des Systems (2) iterativ anhand einer merkmals- und/oder symptombezogenen Analyse der betreffenden Diagnosen (1) derart diagnostiziert wird, dass anhand eines Merkmals (M1), für dessen Symptombeschreibung (S1) ein von einem erwarteten Ergebnis (Esoll) abweichender Wert (W1) vorliegt, diejenigen Diagnosen (1) identifiziert und ausgegeben werden, denen dieses Merkmal (M1) zugeordnet ist, wobei aus den identifizierten Diagnosen (1) anhand eines weiteren Merkmals (M2), für dessen Symptombeschreibung (S2) ein von einem erwarteten Ergebnis (Esoll) abweichender Wert (W2) vorliegt, diejenige Diagnose (1) aus den bereits ausgegebenen Diagnosen (1) identifiziert und ausgegeben wird, der dieses weitere Merkmal (M2) zugeordnet ist.

2. Verfahren nach Anspruch 1, wobei diejenigen Merkmale (M1, M2 bis Mz), für dessen Symptombeschreibung (S1 bis Sz) ein von einem erwarteten Ergebnis (Esoll) abweichender Wert (W1 bis Wz) vorliegt, jeweils einem zugehörigen Symptom (S(M1) bis S(Mz)) zugeordnet werden.

3. Verfahren nach Anspruch 1 oder 2, wobei die als Symptom (S1, S2) identifizierten Merkmale (M1, M2) einer Merkmalsliste (5) zugeordnet und/oder ausgegeben werden.

4. Verfahren nach Anspruch 3, wobei die merkmalsbezogene Analyse der betreffenden Diagnosen (1) solange ausgeführt wird, bis die Merkmalsliste (5) der Ausnahmesituation für eine der Diagnose (1) alle zu dieser zugehörigen Merkmale (M1 bis Mz) als Symptom (S(M1) bis S(Mz)) identifiziert werden.

5. Verfahren nach einem der Ansprüche 1 bis 4, wobei für ein vorgegebenes Merkmal (M1 bis Mz) bei einem vom erwarteten Ergebnis (Esoll) abweichenden Wert (W1 bis Wz) die oder jede zugehörige Diagnose (1) einer Verdachtsdiagnosenliste (6) zugeordnet wird.

6. Verfahren nach einem der Ansprüche 1 bis 5, wobei die dem betreffenden Merkmal (M1 bis Mz) zugehörige Symptombeschreibung (S1 bis Sz) in Art einer Zugehörigkeitsfunktion derart ausgeführt wird, dass sich ein Wahrheitswert in Abhängigkeit davon ergibt, ob der Wert (W1 bis Wz) des Merkmals (M1 bis Mz) Element oder Nichtelement einer bestimmten, die Zugehörigkeitsfunktion repräsentierenden Anzahl von Werten (W1 bis Wz) ist.

7. Verfahren nach einem der Ansprüche 1 bis 6, wobei der Wert (W1 bis Wz) eines Merkmals (M1 bis Mz) ermittelt oder vom Anwender eingegeben wird.

8. Verfahren nach einem der Ansprüche 1 bis 7, wobei die als Symptome (S(M1) bis S(Mz)) identifizierten Merkmale (M1 bis Mz) der Merkmalsliste (5) und/oder die Diagnosen (1) der Verdachtsdiagnosenliste (6) in einer Reihenfolge entsprechend einer vorgegebenen oder vorgebbaren Wertigkeit und/oder Relevanz ausgegeben werden.

9. Verfahren nach Anspruch 8, wobei diejenige Diagnose (1) mit der höchsten Anzahl von als Symptom (S(M1) bis S(Mz)) identifizierten Merkmalen (M1 bis Mz) in die Verdachtsdiagnosenliste (6) am höherwertigsten eingestuft wird oder umgekehrt.

10. Vorrichtung zur rechnergestützten Analyse eines technischen Systems (2), umfassend mindestens ein Mittel zum Speichern einer Mehrzahl von Diagnosen (1), denen jeweils zumindest ein Merkmal (M1 bis Mz) zugeordnet ist, wobei dem Merkmal (M1 bis Mz) wiederum zumindest eine Symptombeschreibung (S1 bis Sz) zugeordnet ist, wobei ein erstes Programmcodemittel zur iterativen Analyse einer Ausnahmesituation des technischen Systems (2) anhand einer symptom- und/oder merkmalsbezogenen Analyse einer betreffenden Diagnose (1), indem anhand der betreffenden gespeicherten Diagnose (1) ein diese repräsentierendes Merkmal (M1 bis Mz) und dessen Symptombeschreibung (S1 bis Sz) bestimmt und überprüft wird, ein zweites Programmcodemittel zur Generierung einer Merkmalsliste (5), indem für das betreffende Merkmal (M1 bis Mz) bei einem von einem erwarteten Ergebnis (Esoll) abweichenden Wert (W1 bis Wz) das betreffende Merkmal (M1 bis Mz) als Symptom (S(M1) bis S(Mz)) in die Merkmalsliste (5) übernommen wird.

11. Vorrichtung nach Anspruch 10, wobei zur interaktiven Ausgabe der Merkmalsliste (5) ein drittes Programmcodemittel vorgesehen ist, mittels dessen anhand von nicht als Symptom (S(M1) bis S(Mz)) identifizierten Merkmalen (M1 bis Mz) die betreffende Diagnose (1) entsprechend bewertet wird.

12. Vorrichtung nach Anspruch 10 oder 11, wobei ein viertes Programmcodemittel zum Anlegen einer Verdachtsdiagnosenliste (6) bei der merkmalsbezogenen Auswertung der Diagnose (1) anhand der Symptombeschreibungen (S) vorgesehen ist.
